# EUROPEAN PATENT SPECIFICATION

(11) **EP 2 463 091 B1**
(45) Date of publication and mention of the grant of the patent: **27.08.2014**
(21) Application number: 12158508.7
(22) Date of filing: 15.12.2004
(51) Int. Cl.: B32B 21/13, B32B 21/14, B32B 21/02, B27D 1/00, B27N 3/02, B27N 3/04

(54) **Hard wood strand products**
Hartholz-Strangprodukte
Produits de brins de bois dur

(30) Priority: 27.01.2004 AU 2004900364
(43) Date of publication of application: 13.06.2012
(62) Divisional of application: 04802058.0
(73) Proprietor: Lignor Limited, Melbourne, VIC 3000 (AU)
(72) Inventor: Burton, Peter Edward, Keppel Sands, Queensland 4702 (AU); Coulthard, Graham, Thomas, Pakenham Victoria 3810 (AU)
(74) Representative: Matthews, Derek Peter

(56) References cited:
- CN-A- 1 149 524
- US-A- 5 067 536
- US-A- 6 129 871
- US-A1- 2003 026 942
- SETSUO IWAKIRI ET AL: "Production of oriented strand board (OSB) from Eucalyptus Grandis with different resin content, wax sizing and face to core layer ratios", CIÊNCIA FLORESTAL , vol. 13, no. 1 2003, pages 89-94, XP002543618, Santa Maria ISSN: 0103-9954 Retrieved from the Internet: URL:http://tiny.cc/kkMiB [retrieved on 2009-08-31]
- SETSUO IWAKIRI ET AL: "Use of Eucalyptus wood for oriented strand board (OSB) manufacturing", CERNE , vol. 10, no. 1 June 2004 (2004-06), pages 46-53, XP002543619, Lavras ISSN: 0104-7760 Retrieved from the Internet: URL:http://tiny.cc/nJn1L [retrieved on 2009-08-31]

## Description

### BACKGROUND TO THE INVENTION

This invention relates to a method of manufacturing a hardwood strand product according to claim 1.

A number of man made timber products are known including particle board (PB), medium density fibreboard (MDF), plywood, laminated veneer lumber (LVL) and oriented strand board (OSB).

Document "SETSUO IWAKIRI ET AL: "Production of oriented strand board (OSB) from Eucalyptus Grandis with different resin content, wax sizing and face to core layer ratios", CIÊNCIA FLORESTAL, vol. 13, no. 1 2003, pages 89-94, Santa Maria ISSN: 0103-9954" discloses a method of manufacturing a hard wood strand product (OSB) from eucalypts plantation trees (http://tiny.cc/kkMiB).

Particle board lacks sufficient strength for most structural uses. Plywoods require veneer sheets from relatively high grade logs. MDF products have a number of uses but generally lack structural strength and moisture resistance. OSB and LVL products have a broad range of uses but also suffer from a relatively low resistance to moisture. Their structural strength and holding capacity for fastenings is also directional.

LVL is an adaptation of old technology from the plywood industry and is similarly reliant on old or larger diameter trees, typically 40 years old or more, and around 500mm in diameter. This provides a relatively low conversion rate from log to LVL product.

Laminated strand lumber (LSL) is another man made timber product but is based on softwoods such as aspen and yellow poplar. These species grow relatively rapidly and this product has also found commercial use as a construction lumber.

### SUMMARY OF THE INVENTION

It is an object of the present invention to provide an improved manufacturing method for strand lumber or board products formed from one or more hardwoods or at least to provide an alternative to existing products.

The invention will result in a strand lumber or board product including substantially aligned strands of one or more eucalypts species bonded together with a binder including an isocyanate resin.

In a preferred embodiment the eucalypt species are Bluegum (E.Globulus), Karri (E.Diversicolor), Sydney Bluegum (E.Saligna), Marri (E.Calophylla) or Jarrah (E.Marginata), and the binder includes a polymeric methane di-isocyanate (PMDI) resin. The binder also includes a wax such as a paraffin emulsion.

Preferably the strands have an average length of between 145mm and 180mm, an average width of about 10 to 25mm, and an average thickness of between 0.5mm and 1.5mm. Preferably at least 70% of the strands are fully aligned.

### DESCRIPTION OF FIGURE

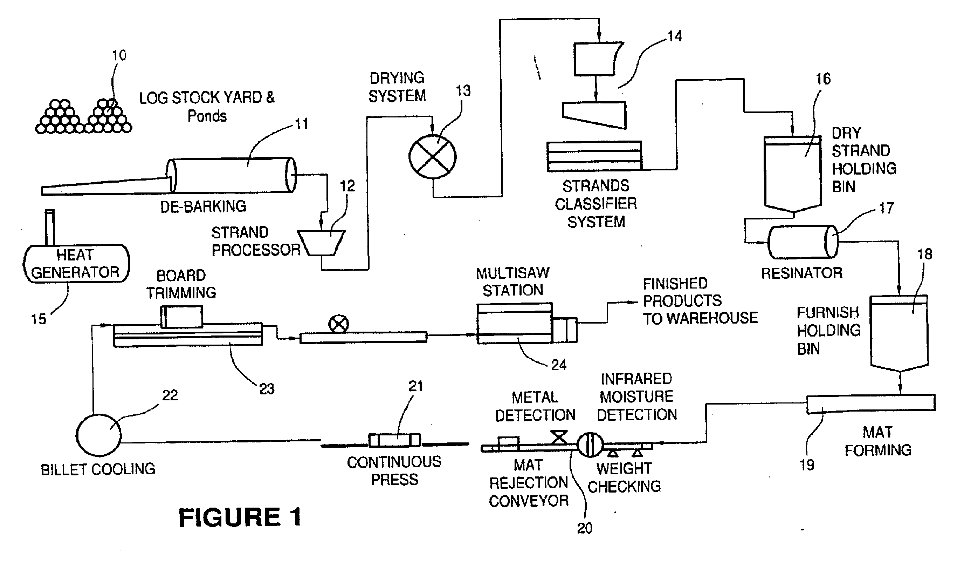

Preferred embodiments of the invention will be described with reference to the accompanying drawing which schematically shows a method of forming a strand lumber product

### DETAILED DESCRIPTION OF THE PREFERRED EMBODIMENTS

Referring to the drawing it will be appreciated that the invention can be implemented in a variety of different products for a range of purposes. The process outlined here is based on the Siempelkamp ContiRoll^{™} system and is given by way of example only. Other processes for manufacturing strand lumber or board products may also be suitable.

As shown in the drawing, the process begins with harvested logs from plantation trees of the genus eucalyptus 10. The preferred eucalypt species are Bluegum (E.Globulus), Karri (E.Diversicolor), Sydney Bluegum (E.Saligna), Marri (E.Calophylla) or Jarrah (E.Marginata). The plantation trees are 8 to 12 years old and have a diameter of around 150 to 200mm. In the case of forest thinnings such as Karri (E.Diversicolor), Marri (E.Calophylla) or Jarrah (E.Marginata) the trees are preferably less than 30 years old and less than 400mm diameter. Single species may be used in a particular product or multiple species may be combined.

The logs are debarked 11 before passing through a strander 12. A ring strander is typically used to cut logs of fixed or random length into strands of a specified length, width and thickness. The strands are preferably formed with a length of about 145mm to 180mm, a width of about 10 to 25mm and a thickness of about 0.5 to 1.5mm.

The strands are dried 13 to preferably less than 5% moisture and are then classified in sieves 14 according to product specifications. A bin 16 holds the dried and classified strands until required.

Waste bark or rejected strands and fines provide the fuel for a heat plant 15 that generates heat for the drier and other parts of the process. About 70% of the original logs can be used to form product. Most of the remaining 30% can be used in the heat plant.

From bin 16 the strands are conveyed on demand to a resin blender 17 in which resin and wax are added in required proportions, typically about 6 to 10 % of dry matter and 2% of dry matter respectively. The mixed strand resin and wax is known as "furnish" and is held in a holding bin 18.

The resin is an isocyanate binder i.e. a polymeric methane di-isocyanate (PMDI). Phenolic or other resins might also additionally be used but generally have less favourable properties. The preferred wax is a paraffin emulsion such as Mobilcer^{™} available from Mobile Australia, or similar products available from Dynea and Oest. Other additives such as pesticides, fungicides and fire retardants can be added at this point and mixed to ensure uniform distribution throughout the finished product matrix.

From bin 18, the furnish is supplied to a mat former 19 where the strands are aligned and deposited to form a mat of the required mass. A combination of alignment and mass controls the mechanical properties of the mat produced. The strands are formed in substantially aligned or unidirectional arrangement. Typically at least 70% of the strands are aligned. Some board products may require a central layer with strands aligned perpendicular to top and/or bottom layers.

The mat then passes a checking station 20 which carries out weight, moisture and metal detection. Any rejected material is conveyed either as waste to the heat plant or set aside for special processing.

Mats which pass the checking station are passed through a preheating station prior to the continuous press 21 to form billets or boards, typically around 30 to 90 mm in thickness for billets and around 8 to 30 mm thickness for boards, all up to 2.7m wide and 15m long. The press heats the material to above 100°C for at least 1 minute. The billets are cooled 22 and trimmed 23 and/or sawn 24 into construction timber products.

A product formed from eucalypts using a process of this kind can be manufactured with full structural rating, and free of knots, bow, twist and wane. The density profile of the material is also substantially uniform. It may in the case of the board product be suitable for uses such as flooring, concrete formwork, decking material and in the case of lumber for structural wood products such as beams and columns, headers and lintels, joists and rafters, walls, studs and plates, and joinery products for example.

The product has been demonstrated to provide a number of advantages over most other softwood and hardwood products. It exhibits a high surface soundness, moisture resistance and shows a low swell rate in the presence of moisture. Additionally, the screw and nail holding performance is high in all planes.

Test products using Bluegum ( E. Globulus) logs and Karri ( E. Diversicolor), thinnings had the following characteristics :
1. Modulus of elasticity of around 14,000 N/mm² for Bluegum and 20,000 N/mm² for Karri.
2. Swell of less than 2% in a standard 24 hour moisture swell test for both products.
3. An internal bond strength of 1.21 N/mm².
4. High screw and nailing performance in all planes.
5. Uniform density profile.
6. A surface soundness of 2.42 N/mm².

These characteristics, particularly the modulus of elasticity are substantially better than those of alternative products, such as Radiata glulam, Douglas fir glulam, Hyspan LVL and MGP12 Pine, for which the moduli are around 12,500 N/mm², 13,500 N/mm², 13,500 N/mm² and 12,700 N/mm² respectively, for example.

## Claims

1. A method of manufacturing a hard wood strand product, the method including:
a) harvesting logs of eucalypts from plantation trees having an age between 8 years and 12 years;
b) forming strands from the logs;
c) adding a binder including a polymeric methane di-isocyanate resin and a wax to the strands;
d) forming a mat with the strands; and,
e) pressing and heating the mat using a press to form the strand product.

2. A method according to claim 1, wherein the plantation trees are Eucalypt species selected from at least one of
a) Bluegum (E. Globulus); and,
b) Sydney Bluegum (E. Saligna).

3. A method according to claim 1 or claim 2, wherein the strands are formed having at least one of:
an average length between 145 mm and 180 mm;
an average width between 10 mm and 25 mm; and,
an average thickness between 0.5 mm and 1.5 mm.

4. A method according to any one of claims 1 to 3, wherein the method further includes substantially aligning the strands.

5. A method according to claim 4, wherein at least 70% of the strands are fully aligned.

6. A method according to any one of claims 1 to 5, wherein the resin and wax are added in proportions of 6 to 10% of dry matter and 2% of dry matter, respectively.

7. A method according to any one of claims 1 to 6, wherein the method further includes drying the strands to less than 5% moisture.

8. A method according to any one of claims 1 to 7, wherein the method further includes at least one of:
debarking the logs (11) and passing the logs through a strander (12) to form the strands;
classifying the strands in sieves (14);
holding dried and classified strands in a bin (16) until required;
conveying the strands from the bin to a resin blender (17) on demand;
in the blender, adding resin and wax in required proportions to form a furnish;
supplying the furnish to a mat former (19) where the strands are aligned and deposited to form a mat of a required mass; and
passing mats through a preheating station and a continuous press (21) to form billets or boards, the press heating the material to above 100 °C for at least 1 minute.

9. A method according to any one of claims 1 to 8, wherein the billets have a thickness of around 30 to 90 nm boards have a thickness of around 8 to 30 nm.

10. A method according to any one of claims 1 to 9, wherein the method further includes at least one of
passing mats through a checking station (20) which carries out weight, moisture and metal detection with rejected material being conveys either as waste to a heat plant (15) or set aside for special processing; and,
using waste bark or rejected strands and fines to provide fuel for a heat plant (15) that generates heat for a drier.

11. A method according to any one of claims 1 to 10, wherein the strand product is formed having a density of between 600 kg/m³ to 850 kg/m³.

12. A method according to any one of claims 1 to 11, wherein the strand product is formed as a lumber or board product.

13. A method according to any one of claims 1 to 2, wherein the strand product is formed having at least one of:
a modulus of elasticity of at least one of:
≥ 14,000 Nmm²; and,
around 14,000 N/mm² for Bluegum (E. Globulus) logs; and
an internal bond strength of at least one of:
≥ 1.21 N/mm²; and,
around 1.21 N/mm² for Bluegum (E. Globulus) logs.

14. A method according to any one of claims 1 to 13, wherein the logs are harvested from plantation trees having a diameter between 150 mm and 200 mm.

15. A method according to any one of claims 1 to 14, wherein the method further includes forming the mat including a top layer, a central layer and a bottom layer, each said layer having substantially aligned strands within a respective layer, wherein the strands of the central layer are aligned perpendicularly to the strands of the top layer and the bottom layer.

## Patentansprüche

1. Verfahren zur Herstellung eines Hartholzstrangprodukts, wobei das Verfahren Folgendes umfasst:
a) das Ernten von Eukalyptus-Holzblöcken von Plantagenbäumen eines Alters zwischen 8 und 12 Jahren;
b) das Bilden von Strängen aus den Holzblöcken;
c) das Zusetzen eines Bindemittels, das ein polymeres Methandiisocyanatharz und ein Wachs umfasst, zu den Strängen;
d) das Bilden einer Matte mit den Strängen; und
e) das Pressen und Erhitzen der Matte unter Anwendung einer Presse, um das Strangprodukt zu bilden.

2. Verfahren nach Anspruch 1, wobei die Plantagenbäume Eukalyptusspezies sind ausgewählt von mindestens einem von:
a) Gemeinem Fieberbaum (E. globulus); und
b) Saligna Sydney (E. saligna).

3. Verfahren nach Anspruch 1 oder Anspruch 2, wobei die Stränge so gebildet werden, dass sie mindestens eines umfassen von:
einer durchschnittlichen Länge zwischen 145 mm und 180 mm;
einer durchschnittlichen Breite zwischen 10 mm und 25 mm; und
einer durchschnittlichen Dicke zwischen 0,5 und 1,5 mm.

4. Verfahren nach einem der Ansprüche 1 bis 3, wobei das Verfahren des Weiteren im Wesentlichen das Gleichrichten der Stränge umfasst.

5. Verfahren nach Anspruch 4, wobei mindestens 70 % der Stränge voll gleichgerichtet sind.

6. Verfahren nach einem der Ansprüche 1 bis 5, wobei das Harz und Wachs in Verhältnissen von jeweils 6 bis 10 % Trockensubstanz und 2 % Trockensubstanz zugegeben werden.

7. Verfahren nach einem der Ansprüche 1 bis 6, wobei das Verfahren des Weiteren das Trocknen der Stränge auf weniger als 5 % Feuchtigkeit umfasst.

8. Verfahren nach einem der Ansprüche 1 bis 7, wobei das Verfahren des Weiteren mindestens eines umfasst von:
Entrinden der Blöcke (11) und Durchführen der Blöcke durch einen Strangbildner (12), um die Stränge zu bilden;
Klassieren der Stränge in Sieben (14);
Halten getrockneter und klassierter Stränge in einem Behälter (16), bis sie benötigt werden;
Befördern der Stränge von dem Behälter zu einem Harzmischer (17) nach Bedarf;
in dem Mischer, Zusetzen von Harz und Wachs in erforderlichen Verhältnissen, um einen Faserstoff zu bilden;
Liefern des Faserstoffs an einen Mattenbildner (19), wo die Stränge gleichgerichtet und abgelegt werden, um eine Matte einer erforderlichen Masse zu bilden; und
Hindurchführen der Matten durch eine Vorerhitzungsstation und kontinuierliche Presse (21), um Stangen oder Platten zu bilden, wobei die Presse das Material mindestens 1 Minute lang auf über 100 °C erhitzt.

9. Verfahren nach einem der Ansprüche 1 bis 8, wobei die Stangen eine Dicke von etwa 30 bis 90 nm und die Platten eine Dicke von etwa 8 bis 30 nm aufweisen.

10. Verfahren nach einem der Ansprüche 1 bis 9, wobei das Verfahren des Weiteren mindestens eines umfasst von:
Hindurchführen der Matten durch eine Prüfstation (20), die Gewichts-, Feuchtigkeits- und Metallerfassung durchführt, wobei verworfenes Material entweder als Abfall zu einer Heizanlage (15) befördert oder für spezielles Verarbeiten abgesondert wird; und
Verwenden von Abfallrinde oder verworfenen Strängen und Feinteilen, um Brennstoff für eine Heizanlage (15) bereitzustellen, die Hitze für eine Trockenanlage erzeugt.

11. Verfahren nach einem der Ansprüche 1 bis 10, wobei das Strangprodukt so gebildet wird, dass es eine Dichte zwischen 600 kg/m³ und 850 kg/m³ aufweist.

12. Verfahren nach einem der Ansprüche 1 bis 11, wobei das Strangprodukt als Block- oder Plattenprodukt gebildet wird.

13. Verfahren nach einem der Ansprüche 1 bis 2, wobei das Strangprodukt so geformt wird, dass es mindestens eines aufweist von:
einem Elastizitätsmodul von mindestens einem von:
≥ 14.000 N/mm²; und
etwa 14.000 N/mm² für Blöcke von Gemeinem Fieberbaum (E. globulus); und
einer internen Bindungsstärke von mindestens einem von:
≥ 1,21 N/mm²; und
etwa 1,21 N/mm² für Blöcke von Gemeinem Fieberbaum (E. globulus).

14. Verfahren nach einem der Ansprüche 1 bis 13, wobei die Blöcke von Plantagenbäumen geerntet werden, die einen Durchmesser zwischen 150 mm und 200 mm aufweisen.

15. Verfahren nach einem der Ansprüche 1 bis 14, wobei das Verfahren des Weiteren das Bilden der Matte umfasst, die eine Deckschicht, eine Mittelschicht und eine untere Schicht umfasst, wobei jede Schicht im Wesentlichen gleichgerichtete Stränge innerhalb einer jeweiligen Schicht aufweist, wobei die Stränge der Mittelschicht senkrecht zu den Strängen der Deckschicht und der unteren Schicht ausgerichtet sind.

## Revendications

1. Procédé de fabrication d'un produit en brins de bois dur, le procédé comprenant les étapes consistant à :
a) récolter des grumes d'eucalyptus sur des arbres de plantation ayant un âge compris entre 8 ans et 12 ans ;
b) former des brins à partir des grumes ;
c) ajouter un liant comprenant une résine de méthane diisocyanate polymère et une cire aux brins ;
d) former un matelas avec les brins ; et
d) presser et chauffer le matelas en utilisant une presse pour former le produit en brins.

2. Procédé selon la revendication 1, dans lequel les arbres de plantation sont des espèces d'eucalyptus choisies dans le groupe d'au moins l'un des suivantes :
a) le Bluegum (E. Globulus) ; et
b) le Sydney Bluegum (E. Saligna).

3. Procédé selon la revendication 1 ou la revendication 2, dans lequel on forme les brins ayant au moins l'une des dimensions suivantes :
une longueur moyenne entre 145 mm et 180 mm ;
une largeur moyenne entre 10 mm et 25 mm ; et
une épaisseur moyenne entre 0,5 mm et 1,5 mm.

4. Procédé selon l'une quelconque des revendications 1 à 3, dans lequel le procédé comprend en outre l'alignement sensible des brins.

5. Procédé selon la revendication 4, dans lequel au moins 70 % des brins sont complètement alignés.

6. Procédé selon l'une quelconque des revendications 1 à 5, dans lequel la résine et la cire sont ajoutées en proportions de 6 à 10 % de matière sèche et de 2 % de matière sèche, respectivement.

7. Procédé selon l'une quelconque des revendications 1 à 6, dans lequel le procédé comprend en outre le séchage des brins à moins de 5 % d'humidité.

8. Procédé selon l'une quelconque des revendications 1 à 7, dans lequel le procédé comprend en outre au moins l'une des étapes consistant à :
enlever l'écorce des grumes (11) et envoyer les grumes à travers un dispositif formateur de brins (12) pour former les brins ;
classifier les brins dans des tamis (14) ;
confiner les brins séchés et classifiés dans une trémie (16) jusqu'à ce qu'ils soient nécessaires ;
acheminer les brins de la trémie à un mélangeur de résine (17) à la demande ;
dans le mélangeur, ajouter de la résine et de la cire dans les proportions requises pour former une composition ;
acheminer la composition à un formateur de matelas (19) où les brins sont alignés et déposés pour former un matelas d'une masse requise ; et
faire passer les matelas à travers un poste de préchauffage et une presse continue (21) pour former des billettes ou des plaques, la presse chauffant le matériau au-dessus de 100 °C pendant au moins 1 minute.

9. Procédé selon l'une quelconque des revendications 1 à 8, dans lequel les billettes ont une épaisseur d'environ 30 à 90 nm tandis que les plaques ont une épaisseur d'environ 8 à 30 nm.

10. Procédé selon l'une quelconque des revendications 1 à 9, dans lequel le procédé comprend en outre au moins l'une des étapes consistant à :
faire passer les matelas à travers un poste de contrôle (20) qui effectue une détection du poids, de l'humidité et du métal, le matériau rejeté étant acheminé sous forme de déchet à une centrale thermique (15) ou mis de côté pour un traitement particulier ; et
utiliser les déchets d'écorce ou les brins rejetés et les fines pour fournir du combustible pour une centrale thermique (15) qui génère de la chaleur pour un sécheur.

11. Procédé selon l'une quelconque des revendications 1 à 10, dans lequel le produit en brins est formé avec une masse volumique comprise entre 600 kg/m³ et 850 kg/m³.

12. Procédé selon l'une quelconque des revendications 1 à 11, dans lequel le produit en brins se présente sous la forme d'un produit en planches ou en plaques.

13. Procédé selon l'une quelconque des revendications 1 à 2, dans lequel le produit en brins est formé avec au moins l'une des caractéristiques suivantes :
un module d'élasticité d'au moins l'un des suivants : ≥ 14 000 N/mm² ; et
autour de 14 000 N/mm² pour des grumes de Bluegum (E. Globulus) ; et
une résistance de liaison interne d'au moins l'une des suivantes :
≥ 1,21 N/mm² ; et
autour de 1,21 N/mm² pour des grumes de Bluegum (E. Globulus).

14. Procédé selon l'une quelconque des revendications 1 à 13, dans lequel les grumes sont récoltées auprès d'arbres de plantation ayant un diamètre entre 150 mm et 200 mm.

15. Procédé selon l'une quelconque des revendications 1 à 14, dans lequel le procédé comprend en outre la formation du matelas comportant une couche supérieure, une couche centrale et une couche inférieure, chaque dite couche ayant des brins sensiblement alignés au sein d'une couche respective, dans lequel les brins de la couche centrale sont alignés perpendiculairement aux brins de la couche supérieure et de la couche inférieure.
